## Europäisches Patentamt
## European Patent Office
## Office européen des brevets

(11) Publication number: **0 180 360**
A2

(12) **EUROPEAN PATENT APPLICATION**

(21) Application number: **85307322.9**

(22) Date of filing: **11.10.85**

(51) Int. Cl.⁴: **B 32 B 27/36**

(30) Priority: **26.10.84 GB 8427135**

(43) Date of publication of application: **07.05.86**
Bulletin 86/19

(84) Designated Contracting States: **AT BE CH DE FR GB IT LI LU NL SE**

(71) Applicant: **IMPERIAL CHEMICAL INDUSTRIES PLC, Imperial Chemical House Millbank, London SW1P 3JF (GB)**

(72) Inventor: **Mackenzie, Moray William, 17 Spell Close, Yarm Cleveland (GB)**

(74) Representative: **Rhind, John Lessels et al, Imperial Chemical Industries PLC Legal Department: Patents PO Box No 6 Bessemer Road, Welwyn Garden City Herts AL7 1HD (GB)**

(54) **Polymeric composite sheet.**

(57) A polymeric composite sheet whith a hydrophilic receptive surface layer, and the use thereof as a carrier sheet. An inorganic particle-filled surface layer is bonded by an intermediate adherent resin layer to a polyester film substrate which may comprise copolymerised residues of an aromatic carbonyl stabiliser. The sheet may serve as a carrier — e.g. for organic solvent-susceptible molecular species deposited from an aqueous medium.

EP 0 180 360 A2

Polymeric Composite Sheet

This invention relates to a polymeric composite sheet and, in particular, to a composite sheet having a hydrophilic surface.

European Patent Publication No. 52427-A discloses an article which comprises a biaxially oriented polyethylene terephthalate film substrate having a coated layer comprising silica and/or alumina particles and a polymeric binder wherein at least some of the particles protrude from the surface of the polymeric binder in the coated layer. The particulate coating functions to reduce or eliminate the undesirable effects of surface misting and light reflection encountered in a humid atmosphere, and the coated article is said to be of utility as a covering or cladding for a horticultural growing house, cold frame or cloche.

In some applications, such as printing an inked pattern onto the particulate-filled layer of a cladding film of the aforementioned kind, or treating the filled layer with an aqueous solvent medium, we have observed that delamination can occur at the interface between the polyethylene terephthalate substrate and the particulate-filled layer.

We have now devised an improved composite sheet which substantially reduces or eliminates such delamination.

Accordingly, the present invention provides a polymeric composite sheet comprising a substrate film of a linear polyester and, on at least one surface thereof, a receptive, hydrophilic layer of a polymeric resin containing an inorganic particulate material, wherein an intermediate adherent polymeric layer is present between the substrate film and the at least one receptive layer.

The invention also provides for the use as a carrier sheet of a polymeric composite sheet comprising a substrate film of a linear polyester having on at least one surface thereof an intermediate adherent polymeric layer and, on the surface remote from the substrate of the at least one adherent polymeric layer, a receptive, hydrophilic layer of a polymeric resin containing an inorganic particulate material.

A composite sheet according to the invention may serve as a carrier sheet for any one of a variety of media. Such use entails deposition onto the receptive layer of an appropriate medium, such as an inked pattern.

The substrate of a composite sheet according to the invention may be formed from any thermoplastics, film-forming polyester. Suitable polyesters may be obtained by condensing one or more dicarboxylic acids or their lower alkyl (up to 6 carbon atoms) diesters, e.g. terephthalic acid, isophthalic acid, phthalic acid, 2,5-, 2,6- or 2,7-naphthalenedicarboxylic acid, succinic acid, sebacic acid, adipic acid, azelaic acid, 4,4'-diphenyldicarboxylic acid, hexahydro- terephthalic acid or 1,2-bis-p-carboxyphenoxyethane (optionally with a monocarboxylic acid, such as pivalic acid) with one or more glycols, e.g. ethylene glycol, 1,3-propanediol, 1,4-butanediol, neopentyl glycol and 1,4-cyclohexanedimethanol. A polyethylene terephthalate film is particularly preferred, especially such a film which has been biaxially oriented by sequential stretching in two mutually perpendicular directions, typically at a temperature in the range of from 78 to 125°C, and preferably heat set, typically at a temperature in the range of from 120 to 250 °, for example - as described in British patent 838 708.

In a preferred embodiment of the invention a composite sheet is rendered resistant to ultra violet (UV) radiation by employing, as the substrate, a film of a linear polyester containing in its chain a copolymerised esterification residue of an aromatic carbonyl stabiliser. Suitably, such esterification residues comprise the residue of a di(hydroxyalkoxy)coumarin - as disclosed in European Patent Publication No. 31202-A, the residue of a 2-hydroxy-di(hydroxyalkoxy)benzophenone - as disclosed in European Patent Publication No 31203-A, the residue of a bis(hydroxyalkoxy)xanth-9-one - as disclosed in European Patent Publication No 6686-A, and, particularly preferably, a residue of a hydroxy-bis(hydroxyalkoxy)-xanth-9-one - as disclosed in European Patent Publication No 76582-A. The alkoxy groups in the aforementioned stabilisers conveniently contain from 1 to 10 and preferably from 2 to 4 carbon atoms, for example - an ethoxy group. The content of esterification residue is conveniently from 0.01 to 30%, and preferably from 0.05 to 10%, by weight of the total substrate polymer. A particularly preferred residue is a residue of a 1-hydroxy-3,6-bis(hydroxyalkoxy)xanth-9-one. The composite sheet may then be used as a carrier for, for example, UV sensitive materials such as liquid crystal 'inks' which may be applied from aqueous slurries using conventional printing techniques e.g. screen printing.

Suitable inorganic particulate materials for incorporation into the receptive layer(s) of a composite sheet according to the invention include metal or metalloid oxides, such as silica, alumina, and zirconia. In particular, the receptive layer preferably comprises a blend of small and large inorganic particles.Thus as disclosed, for example, in European Patent Publication No 52427-A, the receptive layer may be derived from a coating composition comprising:

(a) an inorganic particulate component selected from colloidal silica particles, colloidal alumina or zirconia particles, or a mixture thereof, wherein the silica or alumina particles have a small particle size represented by an average particle size in the range 7 to 50 nm, and the particles comprise 0.5 to 2.5% weight/volume of the total composition;

(b) another inorganic particulate component also selected from colloidal silica particles, colloidal alumina particles, or a mixture thereof, wherein the silica and alumina particles have a large particle size represented by an average particle size in the range 75 to 150 nm and the particles comprise 0.2 to 1.0% weight/volume of the total composition;

(c) 0.1 to 1.0% weight/volume of a polymeric binder;

and  (d) a volatile liquid medium.

The proportions herein expressed as % weight/volume are based upon amounts in grams of the respective component per 100 ml of composition. The amount of colloidal silica, alumina, zirconia or mixture thereof is expressed in terms of the weight of the silica or alumina or zirconia particles in the colloid, i.e. ignoring the aqueous medium and other components of the colloid.

Average particle sizes are expressed herein as the average size of the particles determined, on a weight basis, as the size of the particles in their greatest dimension. Sizes relate to the size of the primary non-agglomerated particles.  Sizes may be measured by photon correlation spectroscopy.

Preferably, both small and large inorganic particles for use in the receptive layer are of the same metal or metalloid oxide, for example, and preferably, colloidal silica particles.  Thus, both small and large particles may comprise colloidal silica.

Preferably, the small particles are present in the coating composition in an amount in the range 0.7 to 1.5% weight/volume, the most preferred range being 1.4 to 1.5% weight/volume.  Average particle sizes in the range 20 to 35 nm are preferred.  A colloidal silica suitable for inclusion as the small particle component is commercially available under the trade name 'Syton' X30 (Monsanto Ltd) and comprises 30 g of silica particles per 100 ml of aqueous colloid, the average particle size measured by the Applicants by photon correlation spectroscopy being approximately 32 nm.

The large particles are preferably present in an amount of from 0.5 to 0.85% weight/volume and especially in an amount of from 0.7 to 0.75% weight/volume and have a preferred average particle size in the range 90 to 130 nm.  The large particles are preferably colloidal silica, a suitable material being that which is commercially available under the trade name 'Syton' W15 (Monsanto Ltd) and which comprises 15 g of silica particles per 100 ml of aqueous colloid, the average particle size measured by Applicants by photon correlation spectroscopy being approximately 100 nm.

In a composite sheet having a receptive layer derived from the aforementioned coating composition it is generally observed that at least some of the silica and/or alumina particles protrude from the surface of the polymeric binder resin in the receptive layer.

As described in European Patent Publication No 52427-A, the polymeric binder resin employed in the production of the particulate-filled composition may be be selected from any material known in the art to be capable of forming a continuous, optically clear film on a substrate to which it is applied.  Such resins include aminoplast resins, gelatin, polyvinylalcohol, sulphonated copolyesters, copolymers of acrylic and/or methacrylic acid and/or their lower alkyl esters, copolymers of styrene with one or more ethylenically unsaturated comonomers and, in particular, polymers of vinyl halogen-esters, such as copolymers of vinyl mono-, di-, or tri-chloroacetate, particularly vinyl monochloroacetate, with 1 to 60 mole % of at least one other ethylenically unsaturated comonomer, e.g. selected from $\alpha,\beta$-unsaturated carboxylic acids, vinyl acetate and vinyl alcohol.

Copolymers of vinyl monochloroacetate with 30 to 60 mole % of vinyl acetate and/or vinyl alcohol are particularly suitable for use as the binder resin, e.g. a copolymer of 56 mole % vinyl monochloroacetate, 43 mole % vinyl alcohol and 1 mole % vinyl acetate.

The coating composition preferably includes 0.1 to 0.5% and most preferably 0.15 to 0.3% weight/volume of the polymeric binder resin.

The coating composition, from which the receptive layer is formed, contains a volatile liquid medium which after drying leaves a continuous uniform coating. Aqueous media may be employed provided the polymeric binder resin is capable of film formation into a continuous uniform coating, generally when applied from an aqueous dispersion or latex.

Normally, however, the volatile liquid medium is a common organic solvent or a mixture of solvents in which the polymeric binder resin is soluble and is also such that the colloidal particles do not precipitate from the coating composition. Suitable organic solvents include methanol, acetone, ethanol, diacetone alcohol and 2-methoxy ethanol. Minor amounts of other solvents such as methylene chloride and methyl ethyl ketone may also be used in admixture with such solvents.

The coating composition may also include additives to improve its hydrophilicity e.g. stannic oxide polymers as described in US patent 3890429. The inclusion of such positively charged stannic oxide polymers alters the surface characteristics of the coating such that the concentration of the non-ionic condensate of nonyl phenol and ethylene oxide is increased as measured by a surface technique such as secondary ion mass spectrometry. The hydrophilicity of the surface may be measured by determining the equilibrium water contact angle.

The applied receptive layer preferably has a dry coat weight

in the range 0.5 to 4.0 mg/dm$^2$. Such dried receptive layers preferably contain from 20 to 90% by weight of small particles and 5 to 65% by weight of the large particles (percentages being based upon the total weight of the layer). Particularly effective layers contain from 25 to 75% by weight of the small particles and 15 to 55% by weight of the large particles. The proportion of small particles preferably exceeds that of the large particles. The total amount of the particle mixture in the dry receptive layer is preferably in the range 65 to 90% by weight of the layer.

The intermediate adherent polymeric layer conveniently comprises any polymeric material known in the art to be capable of forming a continuous, optically clear layer on the substrate. Such polymeric materials include the various polymeric binder resins hereinbefore described as being suitable for use in formulating the receptive layer. In particular, it is preferred that the intermediate adherent layer comprises the same polymeric resin as that employed in the receptive layer. A particularly preferred adherent layer therefore comprises a vinylhalogenoester resin of the kind hereinbefore described. Surprisingly, the use of an adherent layer of the same resin as that employed in the receptive layer confers a significant improvement in resistance to delamination of the receptive layer when exposed to aqueous inks. Furthermore, the presence of an adherent layer has been observed, in certain circumstances, to confer a small increase in total luminous transmittance.

The dry thickness of the adherent layer is conveniently in a range of from 0.01 to 1.0 micron, particularly preferably from 0.05 to 0.2 micron.

Prior to deposition of the intermediate adherent resin onto the polyester substrate the exposed surface thereof may, if desired, be subjected to a chemical or physical surface-modifying treatment to improve the bond between that surface and the subsequently applied adherent resin layer. For example, the exposed surface of the substrate may be subjected to a high voltage electrical stress accompanied by corona discharge. However, in a preferred embodiment of the invention the substrate is pretreated with a priming medium known in the art to have a solvent or swelling action on the polyester substrate. A suitable priming medium comprises a halogenated phenol dissolved in a common organic solvent e.g. a solution of p-chloro-m-cresol, 2,4-dichlorophenol, 2,4,5- or 2,4,6-trichlorophenol or 4-chlororesorcinol in acetone or methanol. If desired, the priming medium may also contain an adhesion-promoting polymer such as a partially hydrolysed copolymer of vinyl chloride and vinyl acetate.

A polyester film substrate for production of a composite sheet according to the invention may be unoriented, or unaxially oriented, but it preferably biaxially oriented by drawing in two mutually perpendicular directions in the plane of the film to achieve a satisfactory combination of mechanical and physical properties. Simultaneous biaxial orientation may be effected by extruding a thermoplastics polymeric tube which is subsequently quenched, reheated and then expanded by internal gas pressure to induce transverse orientation, and withdrawn at a rate which will induce longitudinal orientation. Sequential stretching may be effected in a stenter process by extruding the thermoplastics substrate material as a flat extrudate which is subsequently stretched first in one direction and then in the other mutually perpendicular direction. Generally, it is preferred to stretch firstly in the longitudinal direction, i.e. the forward direction through the film stretching machine, and then in the transverse direction. A stretched substrate film may be, and preferably is, dimensionally stabilised by heat-setting under dimensional restraint at a temperature above the glass transition temperature of the film-forming polymer but below the melting temperature thereof.

Although the respective layers (primer, adherent and receptive) may be applied to the polyester substrate at various stages in the orientation process, for example before orientation commences, or between the longitudinal and transverse orientation steps, it is preferred that the layers are sequentially applied to a biaxially oriented polyester substrate.

Application of the respective layers may be effected by conventional film-coating techniques, for example by gravure roll coating, reverse roll coating, bead coating or slot coating.

An adherent intermediate resin coating may be applied to one or each surface of the polyester substrate, and a receptive layer may be applied to one or each adherent resin layer. Alternatively, one surface of the substrate may be uncoated, or may be coated with a layer of a material other than the herein specified adherent resin medium. For example, an antiscratch layer, a pressure sensitive adhesive layer or a metallic layer may be deposited on the reverse surface of a substrate.

Composite sheets in accordance with the present invention may be prepared in a range of thicknesses governed primarily by the ultimate application for which a particular sheet is to be employed. Sheets, having a total thickness in a range extending from 2.5 to 250 microns are of general utility, although for carrier applications a sheet of from about 20 to 175 microns in total thickness is generally suitable.

The thickness ratio of substrate to adherent resin layer to receptive layer may vary within a wide range, although the thickness of the adherent resin layer preferably should not be less than 0.01% nor greater than 1.0% of that of the substrate. Likewise, the thickness of the receptive layer is desirably at least 0.05% and preferably not greater than about 4.0% of the substrate layer.

One or more of the polymeric layers of a composite sheet according to the invention may conveniently contain any of the additives conventionally employed in the manufacture of thermoplastics polymeric films. Thus, agents such as dyes, pigments, voiding agents, lubricants, anti-oxidants, anti-blocking agents, surface active agents, slip aids, gloss-improvers, prodegradants, ultra-violet light stabilisers, viscosity modifiers and dispersion stabilisers may be incorporated in the substrate and/or adherent resin layer(s) and/or receptive layer(s), as appropriate.

A composite sheet according to the invention is of utility as a carrier sheet for a variety of media, including a pattern deposited from an aqueous ink medium, or a layer, deposited from an aqueous binder medium, and comprising a molecular species which is adversely affected by an organic solvent medium.

The invention is illustrated by reference to the following Examples.

### EXAMPLE 1

A conventional biaxially oriented and heat set transparent film of poly(ethylene terephthalate) of thickness 125 $\mu$m was subjected to an adhesion-promoting pretreatment by coating on both surfaces with a solution of 2.0g of p-chloro-m-cresol in 100 ml of acetone to a wet coat weight of 100 mg/dm$^2$. The pretreatment coatings were dried for about 2 minutes at a temperature of about 90°C.

The pretreated surfaces were coated with a coating composition of the following composition to yield an intermediate adherent polymeric layer:

| | |
|---|---|
| Copolymer of 56 mol % vinylmonochloroacetate/43 mol % vinyl alcohol/ 1 mol % vinyl acetate | 0.23g |
| Hexamethoxymethyl melamine (commercially available as 'Cymel' 300) | 0.002g |
| p-Toluene sulphonic acid | 0.002g |
| Methanol | 14.7 ml |
| Acetone | 83.5 ml |
| Diacetone alcohol | 0.75 ml |
| Methylene chloride | 0.9 ml |

The adherent coating composition was dried at a temperature of about 75°C for about 40 seconds prior to subsequent treating with a coating composition of the following composition to yield a receptive layer.

| | |
|---|---|
| Colloidal silica (commercially available as 'Syton' W15 from Monsanto Ltd) | 2.6 ml |

| | |
|---|---|
| Colloidal silica (commercially available as 'Syton' X30 from Monsanto Ltd) | 1.7 ml |
| Copolymer of 56 mol % vinyl monochloroacetate/ 43 mol % vinyl alcohol/1 mol % vinyl acetate as polymeric binder | 0.21 g |
| Hexamethoxymethylmelamine (commercially available as 'Cymel' 300) | 0.002 g |
| p-toluene sulphonic acid | 0.002 g |
| A non-ionic condensate of nonyl phenol and ethylene oxide (commercially available as 'Lubrol' N13) | 0.11 g |
| Methanol | 51.0 ml |
| Acetone | 42.5 ml |
| Diacetone alcohol | 0.3 ml |
| Methylene chloride | 0.9 ml |

The receptive coating composition was dried at a temperature of about 75°C for about 40 seconds followed by seasoning at a temperature in the range 90-100°C for 2 to 5 minutes to provide a finished receptive coating layer of approximate dry coat weight 2.2 mg/dm$^2$ on each surface of the film.

The relatively hydrophilic nature of the receptive coating may be compared with that of untreated poly(ethylene terephthalate) film by measuring the equilibrium water contact angle after a 30 minute wash followed by copious rinsing with distilled water. The receptive coating had a contact angle of 32° compared with 65° for untreated poly(ethylene terephthalate) film.

Samples of the resultant film were assessed in accordance with the following test methods:

A)    A simple wet adhesion test was performed in which one surface of the 2-side coated film was brushed 10 times with a swab soaked in de-ionised water.  Optical examination of the film surface before and after washing, using a differential interference contrast technique, revealed that no coating material was removed from the film as a result of the washing procedure.

B)    A dry adhesive tape test was performed in which an adhesive tape (Tesa film 104, Beiersdorf AG) was firmly stuck to another sample of the coated film and quickly removed.  Optical examination again revealed that no coating material was removed from the film as a result of the test.

C)    Total luminous transmittance values, measured in accordance with ASTM test D-1003-61, were determined for samples of the original film and also for samples of film respectively subjected to tests A and B.  The total luminous transmittance value of each of the respective samples remained constant at 94.8.

EXAMPLE 2

This is a comparative Example, not according to the invention.

The procedure of Example 1 was repeated save that the intermediate adherent layer was omitted.  Samples of the resultant film, when assessed by the test methods of Example 1, demonstrated that a significant proportion of the receptive coating layer was removed by both the wet and dry adhesion tests.

The reduction in coat adhesion in the absence of an intermediate adherent layer was also demonstrated by the observed reduction in total luminous transmittance values, resulting from removal of a proportion of the receptive layer by the test procedures.

Results are summarised in the accompanying Table.

TABLE

| Film of Example: | Total Luminous Transmittance | | |
|---|---|---|---|
| | Original | After Test A | After Test B |
| 1 | 94.8 | 94.8 | 94.8 |
| 2 | 94.8 | 93.3 | 93.2 |

EXAMPLE 3

A range of other receptive coating formulations were prepared generally as described in Example 1 except that the silica loadings were varied as indicated below.  The silica loadings were varied to each other and to those used in example 1.  (see table 1).

| Sample | Syton W15 (mls) | Syton X30 (mls) |
|---|---|---|
| Control (example 1) | 2.60 | 1.70 |
| a | 1.30 | 1.70 |
| b | 1.95 | 1.70 |
| c | 3.25 | 1.70 |
| d | 3.90 | 1.70 |
| e | 2.60 | 0.85 |
| f | 2.60 | 1.28 |
| g | 2.60 | 2.13 |
| h | 2.60 | 2.55 |
| i | 1.30 | 0.85 |
| j | 1.95 | 1.28 |
| k | 3.25 | 2.13 |
| l | 3.90 | 2.55 |

Samples of the resultant films were assessed in accordance with the test methods given in Example 1.  Optical examination of the film surface before and after washing using differential interference contrast revealed no coating material was removed as a result of washing.  The total luminous transmission values remained constant at their original values.

EXAMPLE 4

A film was prepared generally as described in Example 1 except that the colloidal silicas (Syton W15 and X30) were replaced by a single silica sol (Nalfloc N1034 A) at the same total concentration. The particles in the N1034A had an average particle size of 16-22 nm and contained 33 g of silica particles per 100 mls of aqueous colloid.

0180360

[Unlike the 'Syton" W15 and X30 sols, Nalfloc N1034A is acidic with a pH of 3.1 (c.f. Syton X30 pH 9.8)]

The equilibrium contact angle for this coating composition was measured as 33°.

EXAMPLE 5

A film was prepared generally as described in Example 1 except that the 'Syton' W15 was replaced with 2.6 ml of a 30% w/v zirconia sol.

The equilibrium contact angle for this coating composition was measured as 30°.

EXAMPLE 6

The coating of Example 1 was modified by the addition to it of an inorganic stannic oxide polymer. 10 mls of a stannic oxide polymer, prepared by adding 50g $SnCl_4$ and 5g $SnCl_2$ to 1000 mls of water and heating gradually to 90°C, were added to 1000 mls of coating solution.

The equilibrium contact angle for this coating composition was measured as 19°.

Examination of the coating by secondary ion mass spectometry gave a spectrum similar to that of pure non-ionic surfactant, the stannic oxide apparently being confined to sub-surface layers.

## Claims

1.      A polymeric composite sheet comprising a substrate film of a linear polyester and, on at least one surface thereof, a receptive, hydrophilic layer of a polymeric resin containing an inorganic particulate material wherein an intermediate adherent polymeric layer is present between the substrate film and the at least one receptive layer.

2.      A composite sheet according to claim 1 wherein the substrate film comprises a copolymerised esterification residue of an aromatic carbonyl stabiliser.

3.      A composite sheet according to claim 2 wherein the substrate film comprises a copolymerised esterification residue of a hydroxy-bis(hydroxyalkoxy)xanth-9-one.

4.      A composite sheet according to any one of the preceding claims wherein the inorganic particulate material comprises particles of silica and/or alumina.

5.      A composite sheet according to claim 4 wherein the receptive layer comprises from 20 to 90 weight % of small inorganic particles having an average particle size of from 7 to 50 nm and from 5 to 65 weight % of large inorganic particles having an average particle size of from 75 to 150 nm (the percentages being based upon the total weight of the receptive layer).

6.      A composite sheet according to claim 5 wherein both small and large inorganic particles are silica particles.

7.      A composite sheet according to any one of the preceding claims wherein the receptive layer comprises a component capable of increasing the hydrophilicity of said layer.

8.      A composite sheet according to claim 7 in which the comopund is a stannic oxide polymer.

9.      A composite sheet according to any one of the preceding claims wherein the polymeric resin of the receptive layer comprises a vinylhalogenoester polymer.

10.      A composite sheet according to any one of the preceding claims wherein the intermediate adherent polymeric layer comprises a vinylhalogenoester polymer.

11.      A composite sheet according to any one of the preceding claims wherein the surface of the polyester substrate film is primed, prior to deposition of an adherent layer thereon, with a priming

12.    A composite sheet according to any one of the preceding claims wherein the substrate is a biaxially oriented polyethylene terephthalate film.

13.    The use as a carrier sheet of a composite sheet according to any one of the preceding claims.